# EUROPÄISCHE PATENTSCHRIFT

(11) **EP 1 811 276 B1**
(45) Veröffentlichungstag und Bekanntmachung des Hinweises auf die Patenterteilung: **16.09.2015**
(21) Anmeldenummer: 06012595.2
(22) Anmeldetag: 20.06.2006
(51) Int. Cl.: G01K 3/08, G01K 7/20

(54) **Schaltungsanordnung und Verfahren zur Ermittlung der Temperaturdifferenz zwischen zwei Temperatursensoren**
Circuit and method for determining the temperature difference between two temperature sensors
Circuit et méthode pour déterminer la différence de température entre deux capteurs de température

(30) Priorität: 24.01.2006 DE 102005029319
(43) Veröffentlichungstag der Anmeldung: 25.07.2007
(73) Patentinhaber: ABB Technology AG, 8050 Zürich (CH)
(72) Erfinder: Rüegg, Walter, Dr.-Ing., 5304 Endingen (CH); Peper, Stephen, Dr.-Ing., 67273 Weisenheim am Berg (DE); Bloch, Richard, 5415 Nussbaumen (CH)
(74) Vertreter: Miller, Toivo

(56) Entgegenhaltungen:
- DE-A1- 3 330 915
- US-A- 4 201 088

## Beschreibung

Die Erfindung betrifft eine Schaltungsanordnung zur Ermittlung eines Temperaturwertes mittels wenigstens eines mit einer Stromquelle verbundenen Temperatursensors, wobei sie dessen von der Temperatur abhängigen Spannungsabfall verarbeitet. Ein solcher Temperatursensor kann beispielsweise als PT-100 Sensor ausgeführt sein.

Messumformer für PT-100 Widerstände wandeln den Widerstand eines als PT-100 ausgeführten resistiven Sensors in ein temperatur- oder widerstandslineares Ausgangssignal um. Die Temperaturdifferenz zwischen zwei PT-100 Widerstandsthermometern wird üblicherweise mittels einer als Wheatstone-Messbrücke ausgeführten Gleichstrom-Messbrücke gemessen. Die Grundschaltung der Wheatstone-Messbrücke besteht aus vier Brückenwiderständen und einem einen Differenzverstärker aufweisendem Messgerät, wobei die Schaltung von einer Gleichspannung gespeist wird. Um Thermospannungsfehler zu minimieren kann, auch eine Speisung mit einer Wechselspannung oder einer alternierenden Gleichspannung vorgesehen sein.

Das Messgerät ist so ausgeführt, dass mittels eines Differenzverstärkers die Widerstandsdifferenz ermittelt wird.

Typische Probleme, die bei der Bestimmung der Temperaturdifferenz mittels der Wheatstone-Messbrücke auftreten, beziehen sich darauf, dass die durch den Differenzverstärker des Messgerätes verursachten Fehler das Ausgangssignal und somit die ermittelte Temperaturdifferenz beeinflussen. Eine Schwankung der Gleichspannung, welche die Schaltung speist, verursacht ebenfalls Fehler bei der Ermittlung der Temperaturdifferenz zwischen den beiden PT-100-Sensoren.

Auch die durch die Brückenwiderstände der Wheatstone-Messbrücke bedingten Fehler, wie Temperaturdrift und Langzeitänderungen, beeinflussen die ermittelte Temperaturdifferenz.

Typische Probleme, die bei der Bestimmung der Temperaturdifferenz mittels der Wheatstone-Messbrücke auftreten, beziehen sich darauf, dass die durch den Differenzverstärker des Messgerätes verursachten Fehler das Ausgangssignal und somit die ermittelte Temperaturdifferenz beeinflussen. Eine Schwankung der Gleichspannung, welche die Schaltung speist, verursacht ebenfalls Fehler bei der Ermittlung der Temperaturdifferenz zwischen den beiden PT-100-Sensoren.

Auch die durch die Brückenwiderstände der Wheatstone-Messbrücke bedingten Fehler, wie Temperaturdrift und Langzeitänderungen, beeinflussen die ermittelte Temperaturdifferenz.

Die DE 2220915 A1 beschreibt eine Auswerteschaltung für eine Reihenschaitung von zwei temperaturabhängigen Fühlerwiderständen, welche enthält einen Multiplexer, der die Spannungsabfälle über den Fühlerwiderständen nacheinander abfragt, einen Analog-Digital-Umsetzer, der Digitalsignale erzeugt, und eine Rechenschaltung eines Mikroprozessors, die die Digitalsignale auswertet. Über einen Ausgang des Mikroprozessors kann u.a. die Differenztemperatur auf einer Anzeigevorrichtung ausgegeben werden. Ein weiterer Ausgang ist mit einem Digital-Analog-Umsetzer verbunden, an dessen Ausgang ein Stromsignal über die Differenztemperatur abgegeben werden kann.

Ausgehend vom eingangs genannten Stand der Technik liegt der Erfindung die Aufgabe zugrunde, eine Schaltungsanordnung zur Ermittlung der Temperaturdifferenz zwischen zwei Temperatursensoren anzugeben, wodurch die Messgenauigkeit der ermittelten Temperaturdifferenz erhöht und Messfehler reduziert werden.

Diese Aufgabe wird erfindungsgemäß durch eine Schaltungsanordnung mit den im Anspruch 1 angegebenen Merkmalen gelöst. Vorteilhafte Ausgestaltungen und Verbesserungen der erfindungsgemäßen Schaltungsanordnung sind in weiteren Ansprüchen und in der Beschreibung angegeben.

Bei der Schaltungsanordnung werden die beiden Temperatursensoren mittels einer aus wenigstens zwei Schaltern aufgebauten Schalteranordnung wechselweise an einen nachgeschalteten, vorzugsweise als Delta- Sigma-Wandler ausgeführten A/D-Wandler, gelegt. Der A/D-Wandler digitalisiert den jeweils durchgeschalteten Signalpegel der Temperatursensoren und überträgt die digitalisierten Signale einem nachgeschalteten digitalen Rechner zur Verarbeitung. Der digitale Rechner ermittelt aus den digitalisierten Signalen der beiden Temperatursignale ein Temperaturdifferenzsignal und stellt das Temperaturdifferenzsignal an einem ersten Ausgang bereit. Das Temperaturdifferenzsignal ist über wenigstens einen D/A-Wandler als analoges Temperaturdifferenzsignal oder über wenigstens eine digitale Schnittstelle als digitale Information zur weiteren Verarbeitung ausgebbar.

Erfindungsgemäß sind der Schalteranordnung wenigstens zwei einander entsprechende, symmetrisch aufgebaute und symmetrisch arbeitende Eingangsstufen zur Störspannungsunterdrückung und zum Überspannungsschutz zur Verbindung der Temperatursensoren mit der Schalteranordnung vorgeschaltet.

Die aus den wenigstens zwei hochpräzise arbeitenden Schaltern aufgebaute Schalteranordnung ist auch dafür vorgesehen, die Strom- oder Spannungsversorgung der Sensoren umzuschalten.

Die Schalter sind beispielsweise diskrete Halbleiterschalter, vorzugsweise FET (Feldeffekt)-Transistoren,- integrierte Halbleiterschalter oder mechanische, vorzugsweise als Relais, ausgeführte Schalter und bezüglich ihrer elektrischen Eigenschaften, wie Ansprechzeit, Durchlasswiderstand und Leckströme, möglichst identisch ausgeführt.

Sind die Temperatursensoren in 4-Leiter-Technik angeschlossen, so sind mindestens drei Schalter für jeden Temperatursensor vorzusehen, wobei zwei Schalter mit den Anschlüssen der Eingangssignale verbunden werden, und mindestens ein Schalter für die Speisung des Temperatursensors, vorzugsweise als Stromspeisung, vorgesehen ist.

Ein weiterer Anschluss des Temperatursensors, der so genannte negative Pol des Temperatursensors, wird entweder über einen vierten Schalter geführt oder fest mit der Masse verbunden.

Bei der Verwendung der 4-Leiter-Anschlusstechnik für die Temperatursensoren sind die Widerstände der Leitungskabel zu den Temperaturfühlern auf Grund der hohen Impedanz des Eingangsverstärkers vernachlässigbar.

Sind die PT-100-Sensoren in 2-Leiter-Anschlusstechnik angeschlossen, ist ein einziger Schalter pro Sensor ausreichend. Der Schalter schaltet sowohl die Sensorspeisung als auch das Sensorsignal. Die 2-Leiter-Anschlusstechnik wird eingesetzt, wenn die Leitungswiderstände keine Rolle spielen oder konstant bleiben.

Bei einem 3-Leiter-Anschuss der Temperatursensoren ist die entsprechende Schalteranordnung aus wenigstens zwei Schaltern pro Temperatursensor aufgebaut.

Der digitale Rechner ist vorzugsweise ein Mikroprozessor, ein Mikrocontroller, ein DSP (Digital Signal Processor), ein ASIC (Application Specific Integrated Circuit) oder ein FPGA (Field Programmable Gate Array).

Der Mikroprozessor bestimmt aus den digitalisierten Signalen der beiden Temperatursensoren ein Temperaturdifferenzsignal und führt das Temperaturdifferenzsignal einem ersten analogen oder digitalen Ausgang zu.

Über einen D/A-Wandler oder eine digitale Schnittstelle wird das Temperaturdifferenzsignal, beispielsweise an eine Prozesssteuerung, weitergegeben.

Die Linearisierung des Temperatursignals wird durch Einspeisung eines entsprechenden Korrekturstroms in eine mit den Temperatursensoren verbundenen Stromquelle durchgeführt. Der Einfluss der Widerstände der Leitungskabel wird durch die sehr hochohmige Eingangsstufe des Differenzverstärkers eliminiert, die Differenzbildung im Mikrocomputer minimiert ebenfalls einen entsprechenden Einfluss, wenn die die Leitungswiderstände gleich sind ausgeführt sind.

Bei der erfindungsgemäßen Schaltungsanordnung sind zwischen den Temperatursensoren und den Schaltern wenigstens je eine Eingangsstufe zum Schutz vor Überspannungen und Störspannungen vorhanden. Die einander entsprechenden Eingangsstufen sind in vorteilhafter Weise elektrisch und mechanisch streng symmetrisch ausgelegt, wodurch Messfehler, die durch Thermospannungen, Leckageströme und andere elektrische oder zeitliche Effekte bedingt sind, eliminiert werden.

Der symmetrische Aufbau der Eingangsstufen wird, insbesondere durch eine symmetrische Anordnung der Bauelemente und der Anschlusspunkte für die Einspeisung der Eingangsstufen auf der Leiterplatte erreicht.

Bei beiden Kanälen der Eingangsstufen, welche vom Mikroprozessor der Schaltungsanordnung gesteuert werden, sind sowohl Pausen- und Einschwingzeit als auch die Messzeit exakt gleich und mit dem A/D-Wandler synchronisiert.

Durch den Einsatz einer digitalen Steuerschaitung, vorzugsweise eines Mikroprozessors, sowohl zur Steuerung der Pausen- und Einschwingzeit der symmetrisch aufgebauten Eingangsstufen als auch der Messzeit, werden somit in vorteilhafter Weise Fehler durch dielektrische Effekte in den in der Eingangsstufe vorgesehenen Kondensatoren reduziert sowie durch das Einschwingverhalten bedingte Messfehler weitgehend vermieden.

Auch die durch mechanische Belastungen, insbesondere durch Vibrationen oder Spannungen bedingten Messfehler beim Messen der beiden Temperatursensoren, wie Mikrophoneffekte und mechanisch induzierte elektrische Spannungen sowie elektrische Messfehler, wie Leckströme, Spannungsabfälle, Ladungsinjektion, elektromagnetische Verträglichkeit und der Schaltwiderstand der Schalteranordnung werden durch die erfindungsgemäße symetrische Schaltungsanordnung ebenfalls reduziert oder vermieden.

In einer vorteilhaften Weiterbildung der erfindungsgemäßen Schaltungsanordnung ist vorgesehen, dass der Mikroprozessor einen zweiten Ausgang aufweist, welcher über einen weiteren D/A-Wandier mit einer weiteren Ausgangsstufe verbunden ist. Die weitere Ausgangsstufe stellt ein der gemessenen absoluten Temperatur eines der Temperatursensoren entsprechendes Temperatursignal bereit.

Durch die vorteilhafte Anordnung der erfindungsgemäßen Schaltungsanordnung auf einer speziellen innere Kupferlagen aufweisenden Mehrlagenleiterplatte sind thermische, vorzugsweise als Kupferflächen oder Kupferlagen ausgeführte Ausgleichsflächen vorhanden, die die Temperaturgradienten und damit die Thermospannungsfehler minimieren. Die Kupferlagen befinden sich vorzugsweise unter den Teilen der erfindungsgemäßen Schaltung, an denen thermische Spannungen auftreten, beispielsweise unterhalb der Eingangsstufen und den Schaltern der Schalteranordnung.

Da in der erfindungsgemäßen Schaltungsanordnung keine Widerstände als Messbrücken-Ergänzungswiderstände notwendig sind, entfallen alle diesbezüglichen Messfehler, die beispielsweise durch Langzeit- oder Temperaturdrifts bedingt sind.

Das Verfahren mit dem die Aufgabe weiterhin gelöst wird, ist dem Anspruch 17 zu entnehmen. Dabei werden die Signalpegel der Temperatursensoren mittels einer Schalteranordnung wechselweise einem nachgeschalteten A/D-Wandler zugeführt.

Die jeweils durchgeschalteten Signalpegel der Temperatursensoren werden mittels des A/D-Wandlers digitalisiert und einem nachgeschalteten Mikroprozessor zur Verarbeitung übertragen, welcher aus den digitalisierten Signalen ein Temperaturdifferenzsignal ermittelt.

Das Temperaturdifferenzsignal wird über einen ersten Ausgang des Mikroprozessors wenigstens einen D/A-Wandler oder eine digitale Schnittstelle als analoges Temperaturdifferenzsignal oder als digitale Information zur weiteren Verarbeitung, beispielsweise in einer Prozesssteuerung, bereitgestellt.

Erfindungsgemäß sorgen wenigstens zwei einander entsprechende, symmetrisch aufgebaute und symmetrisch arbeitende Eingangsstufen für Störspannungsunterdrückung und Überspannungsschutz.

Anhand des in den folgenden Figuren dargestellten Ausführungsbeispieles sollen die Erfindung sowie vorteilhafte Ausgestaltungen, Verbesserungen und weitere Vorteile der Erfindung näher erläutert und beschrieben werden.

Es zeigen:
- **Fig. 1**: eine schematische Darstellung einer Ausführungsform der erfindungsgemäßen Schaltungsanordnung zur Ermittlung der Temperaturdifferenz zwischen zwei PT-100-Sensoren,
- **Fig. 2**: eine detaillierte Ausführungsform des analogen Schaltungsteils der erfindungsgemäßen Schaltungsanordnung, und
- **Fig. 3**: eine detaillierte Ausführungsform des digitalen Schaltungsteils der erfindungsgemäßen Schaltungsanordnung.

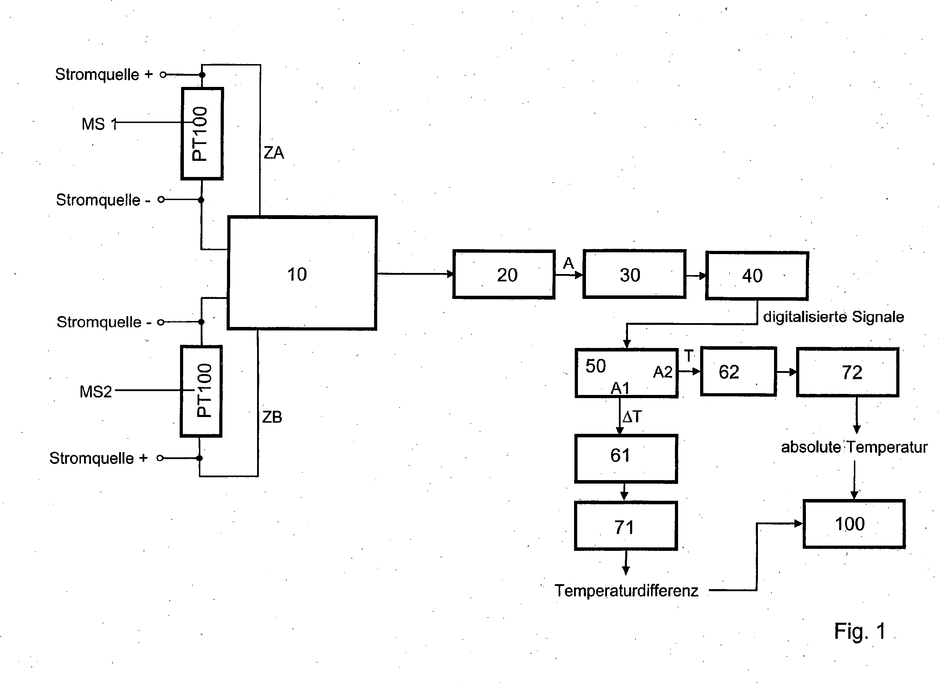

**Fig. 1** zeigt eine Ausführungsform der erfindungsgemäßen Schaltungsanordnung zur Ermittlung der Temperaturdifferenz zwischen zwei in 4-Leitertechnik angeschlossenen Temperatursensoren MS1, MS2, wobei die als PT100-Widerstände ausgeführten Temperatursensoren MS1, MS2 über zwei nicht dargestellte symmetrisch aufgebaute Eingangsstufen mit einer als Halbleitermultiplexer 10 ausgeführten Schalteranordnung 10 verbunden sind. Dem Halbleitermultiplexer werden jeweils die Eingangstemperatursignale ZA, ZB der PT100-Widerstände MS1, MS2 übertragen.

Der hochpräzise arbeitende Multiplexer 10 führt die Signalpegel A der Temperatursensoren MS1, MS2 wechselweise einer hochpräzise arbeitenden Verstärker- und Filterstufe 30, auch Präzisionsverstärker genannt, zu. Die Verstärkerstufe 30 verstärkt den jeweils anstehenden Signalpegel A für einen nachgeschalteten, als hochauflösenden Delta-Sigma-Wandler arbeitenden A/D-Wandler 40.

Ein zwischen dem Multiplexer 10 und der Verstärkerstufe 30 vorgesehener hochgenauer leckstromarmer Differenzverstärker 20 ist zur Messung des Spannungsabfalls an den Temperatursensoren MS 1 und MS2 vorgesehen.

In einer alternativen Ausgestaltung der erfindungsgemäßen Schaltungsanordnung ist zwischen der Schalteranordnung 10 und dem A/D-Wandler 40 mindestens eine Verstärkerstufe 30 und/oder ein Differenzverstärker 20 zur Messung des Spannungsabfalls an den Temperatursensoren MS1, MS2, zur Signalpegelanpassung und zur Elimination von hochfrequenten Störspannungen vorgesehen.

In einer weiteren Ausführungsform der erfindungsgemäßen Schaltungsanordnung ist vorgesehen alternativ zur Verstärkerstufe 30 und zum Differenzverstärker 20 den Signalpegel A auch direkt einem A/D-Wandler mit geeigneten Eingangschaltkreisen zuzuführen.

Der A/D-Wandler 40 digitalisiert die Signale der Verstärkerstufe 30 und überträgt die digitalisierten Signale einer als Mikroprozessor ausgeführten nachgeschalteten digitalen Rechenschaltung 50. Der Mikroprozessor 50 ermittelt aus den digitalisierten Signalen ein Temperaturdifferenzsignal ΔT der beiden PT100-Widerstände MS1, MS2 und stellt das ermittelte Temperaturdifferenzsignal ΔT an einem ersten Ausgang A1 zur weiteren Verarbeitung bereit.

Der Mikroprozessor 50 steuert über einen-digitalen Bus einen nachgeschalteten D/A-Wandler 61, welcher das Temperaturdifferenzsignal ΔT als analoges Spannungssignal an eine Ausgangsstufe 71 überträgt.

In einer vorteilhaften Ausgestaltung der erfindungsgemäßen Schaltungsanordnung ist vorgesehen den D/A-Wandler 61 durch eine digitale Schnittstelle zu ersetzen, welche beispielsweise als Profibus ausgeführt ist. Mittels der digitalen Schnittstellen ist eine digitale Datenausgabe durchführbar.

Ein Verstärker 81 der Ausgangsstufe 71 filtert das dem Temperaturdifferenzsignal entsprechende analoge Spannungssignal und erzeugt an einem geschützten Spannungsausgang die Spannung Uout1 zur Weiterverarbeitung in einer Prozesssteuerung 100, wobei die Spannung Uout1 dem ermittelten Temperaturdifferenzsignal ΔT entspricht.

Mit der erfindungsgemäßen Schaltungsanordnung ist optional vorgesehen zusätzlich zum erzeugten Temperaturdifferenzsignal, mittels einer mit einem zweiten Ausgang A2 des Mikroprozessors über einen weiteren D/A-Wandler 62 verbundenen weiteren Ausgangsstufe 72 ein der gemessenen absoluten Temperatur eines der PT-100-Sensoren MS1, MS2 entsprechendes Temperatursignal T als weiteres Spannungssignal Uout2 für einen festgelegten Temperaturbereich bereitzustellen.

Ein weiterer Verstärker 82 der weiteren Ausgangsstufe 72 filtert das der gemessenen absoluten Temperatur eines der PT-100-Sensoren MS1, MS2 entsprechende analoge weitere Spannungssignal und erzeugt an einem weiteren geschützten Spannungsausgang die Spannung Uout2.

Das von der weiteren Ausgangsstufe 72 bereitgestellte Temperatursignal T ist ebenfalls für eine weitere Verarbeitung in der Prozesssteuerung 100 vorgesehen.

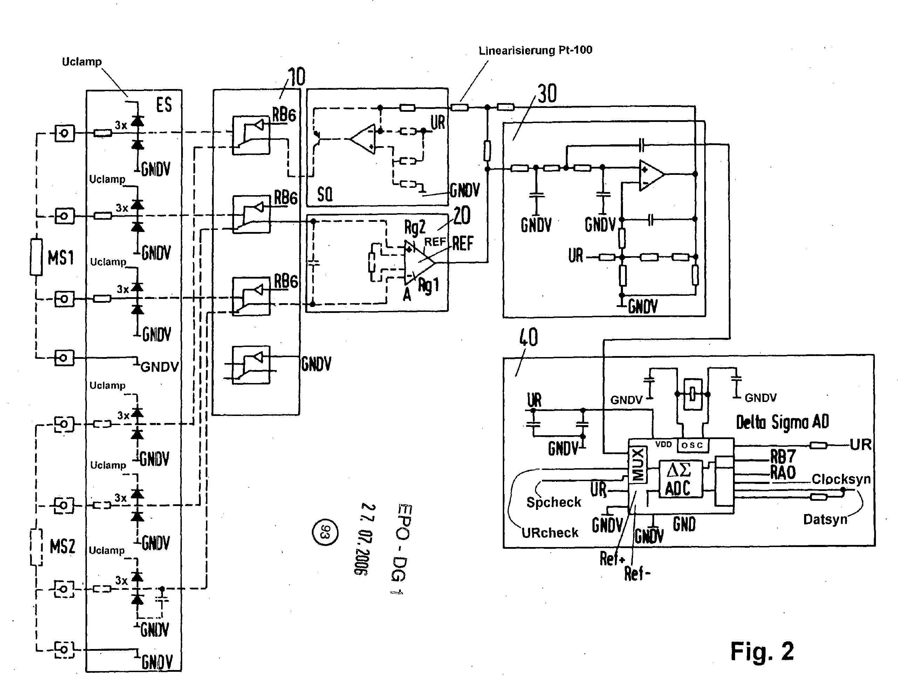

**Fig. 2** zeigt eine detaillierte Ausführungsform des analogen Schaltungsteils der erfindungsgemäßen Schaltungsanordnung mit zwei PT100-Widerständen MS1, MS2, die jeweils über zwei symmetrisch aufgebaute Eingangsstufen ES, deren beispielhafte Ausführung die Fig. 2 zeigt, mit zwei Zweifach- Halbleitermultiplexem 10 verbunden sind.

Die zwei streng symmetrisch aufgebauten Eingangsstufen ES sind für eine Störspannungsunterdrückung und einen Überspannungsschutz vorgesehen.

Als Überspannungsschutz ist ein Schutzelement mit extrem kleinen Leckströmen, vorzugsweise unter 10µA vorgesehen.

Die in 4-Leitertechnik angeschlossenen PT100- Widerständen sind jeweils mit einem Multiplexer an einer Stromquelle SQ verbunden, welche einen konstanten Strom für die PT100- Widerstände erzeugt.

Der Zweifach-Multiplexer 10 führt die Signalpegel A der PT100- Widerstände MS1, MS2 wechselweise über den Differenzverstärker 20 dem Präzisionsverstärker 30 zu, welcher jeweils die anstehenden Signalpegel A dem nachgeschalteten, hochauflösenden 24-bit Delta-Sigma-Wandler 40 bereitstellt.

Der 24-bit Delta-Sigma-Wandler 40 digitalisiert die Signale der Verstärkerstufe 30 und überträgt die digitalisierten Signale dem in **Fig**. 3 dargestellten Mikroprozessor 50, welcher aus den digitalisierten Signalen ein Temperaturdifferenzsignal ΔT der beiden PT100-Widerstände MS1, MS2 ermittelt und das ermittelte Temperaturdifferenzsignal ΔT an dem ersten Ausgang A1 des Mikroprozessors 50 zur weiteren Verarbeitung bereitstellt.

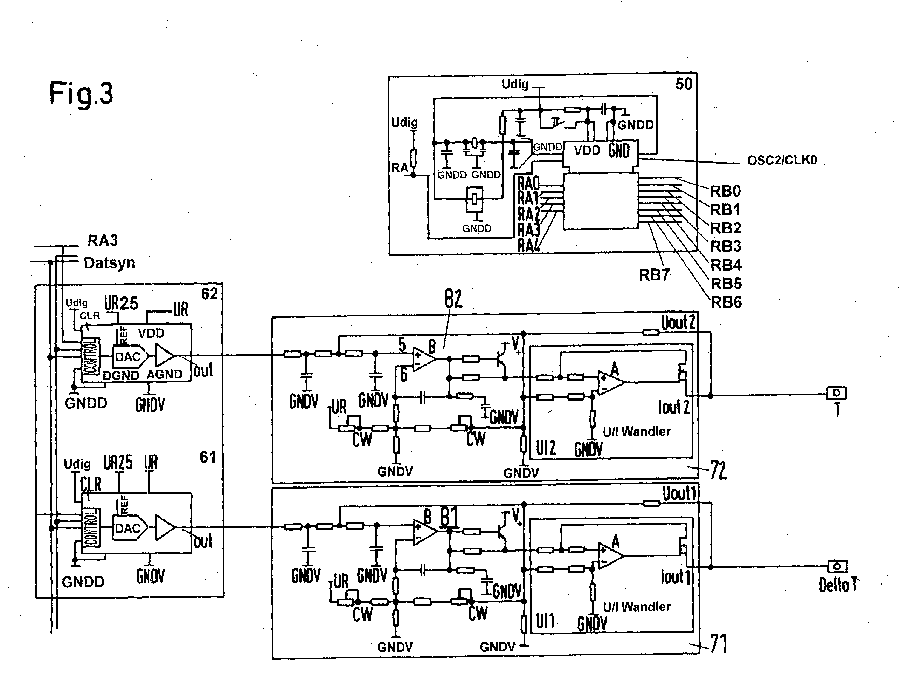

**Fig. 3** zeigt eine detaillierte Ausführungsform des digitalen Schaltungsteils der erfindungsgemäßen Schaltungsanordnung.

Der Mikroprozessor 50 steuert die nachgeschaltete 16-bit-D/A-Wandler-Anordnung 61, 62, welche das Temperaturdifferenzsignal ΔT jeweils an die zwei als Verstärker arbeitende Ausgangsstufen 71, 72 überträgt.

Die Ausgangsstufen 71, 72 filtern jeweils das analoge Temperaturdifferenzsignal und das Temperatursignal mittels einem Filters 3. Ordnung, Frequenz 1Hz.

Die Ausgangsstufe 71 erzeugt ein geschütztes 0-10V-Spannungssignal am Spannungsausgang Uout1 entsprechend dem Temperaturdifferenzsignal.

Die weitere Ausgangsstufe 72 erzeugt ein der gemessenen absoluten Temperatur eines der PT-100-Sensoren MS1, MS2 entsprechendes Temperatursignal als weiteres 0-10V- Spannungssignal Uout2.

Die Ausgangsstufen 71,72 weisen in einer vorteilhaften Ausgestaltung der Erfindung weiterhin jeweils einen U/I-Wandler U11, U12 auf, der die Spannungssignale Uout1, Uout2 in 0/4 - 20mA- Stromsignale lout1, lout2 umwandelt.

Die erfindungsgemäße Schaltungsanordnung ist zum Einbau in ein kompaktes, industrietaugliches DIN-Schienengehäuse, vorzugsweise mit 16 Schraubklemmenanschlüssen vorgesehen, und wird vorzugsweise zur Messung von sehr kleinen Temperaturdifferenzen bei der Bestimmung von Wirkungsgraden von Pumpen eingesetzt.

Die in der Fig. 2 und 3 dargestellte beispielhafte Schaltungsanordnung ermöglicht in vorteilhafter Weise Temperaturdifferenzen mit einem maximalen Fehler von bis zu 10 ppm vom Messwert zuverlässig zu messen und Differenzfehler (Offsets) kleiner als 1 mK zu erreichen.

## Patentansprüche

1. Schaltungsanordnung zur Ermittlung der Temperaturdifferenz zwischen zwei Temperatursensoren (MS1, MS2), mit
- einer Schalteranordnung (10), welcher Eingangstemperatursignale (ZA, ZB) der Temperatursensoren (MS1, MS2) übertragen werden,
- einem A/D-Wandler (40), dem durch die Schalteranordnung (10) die Signalpegel der Temperatursensoren (MS1, MS2) wechselweise zugeführt werden, der die Signalpegel digitalisiert und der die digitalisierten Signale einem nachgeschalteten digitalen Rechner (50) zur Verarbeitung überträgt,
- dem digitalen Rechner (50), der aus den digitalisierten Signalen ein Temperaturdifferenzsignal (AT) ermittelt und das Temperaturdifferenzsignal (AT) einem ersten Ausgang (A1) des digitalen Rechners (50) bereitstellt, und
- wenigstens einem D/A-Wandier (61), der das Temperaturdifferenzsignal in ein analoges Temperaturdifferenzsignalwandelt oder wenigstens einer digitalen Schnittstelle, die das Temperaturdifferenzsignal als digitale Information zur weiteren Verarbeitung bereitstellt,
**dadurch gekennzeichnet, dass**
- die Schaltungsanordnung auf einer innere Kupferlagen aufweisenden Mehrlagenleiterplatte angeordnet ist, und
- der Schalteranordnung (10) wenigstens zwei einander entsprechende, symmetrisch aufgebaute und symmetrisch arbeitende Eingangsstufen (ES) zur Störspannungsunterdrückung und zum Überspannungsschutz zur Verbindung der Temperatursensoren (MS1, MS2) mit der Schalteranordnung (10) vorgeschaltet sind, wobei die Eingangsstufen (ES) elektrisch und mechanisch symmetrisch ausgelegt sind und der symmetrische Aufbau durch eine symmetrische Anordnung der Bauelemente und der Anschlusspunkte für die Einspeisung der Eingangsstufen (ES) auf der Leiterplatte erreicht wird.

2. Schaltungsanordnung nach Anspruch 1, **dadurch gekennzeichnet, dass** bei beiden Kanälen der Eingangsstufen (ES) Pausen- und Einschwingzeit als auch Messzeit exakt gleich sind.

3. Schaltungsanordnung nach einem der vorhergehenden Ansprüche, **dadurch gekennzeichnet, dass** als Überspannungsschutz ein Schutzelement mit extrem kleinen Leckströmen vorgesehen ist.

4. Schaltungsanordnung nach einem der vorhergehenden Ansprüchen, **dadurch gekennzeichnet, dass** die Schalteranordnung (10) die Strom- oder Spannungsversorgung der Temperatursensoren umschaltet.

5. Schaltungsanordnung nach einem der vorhergehenden Ansprüche, **dadurch gekennzeichnet, dass** die Schalteranordnung (10) als Halbleitermultiplexer ausgeführt ist.

6. Schaltungsanordnung nach einem der vorhergehenden Ansprüche, **dadurch gekennzeichnet, dass** zwischen der Schalteranordnung (10) und dem A/D-Wandler (40) mindestens eine Verstärkerstufe (30), die den jeweils durchgeschalteten Signalpegel (A) für den nachgeschalteten A/D-Wandler (40) anpasst, und/oder ein Differenzverstärker (20) zur Messung des Spannungsabfalls an den Temperatursensoren (MS1, MS2) und zur Kompensation eines Offsets vorgesehen ist.

7. Schaltungsanordnung nach einem der vorherigen Ansprüche, **dadurch gekennzeichnet, dass** dem D/A-Wandler (61) eine Ausgangsstufe (71) zur Filterung und/oder Signalanpassung des analogen Temperaturdifferenzsignals nachgeführt ist.

8. Schaltungsanordnung nach einem der vorherigen Ansprüche, **dadurch gekennzeichnet, dass** der digitale Rechner (50) einen zweiten Ausgang (A2) aufweist, welcher über einen weiteren D/A-Wandler ,(62) mit einer weiteren Ausgangsstufe (72) verbunden ist.

9. Schaltungsanordnung nach Anspruch 8, **dadurch gekennzeichnet, dass** die weitere Ausgangsstufe (72) ein der gemessenen absoluten Temperatur eines der Temperatursensoren (MS1, MS2) entsprechendes Temperatursignal bereitstellt.

10. Schaltungsanordnung nach einem der vorherigen Ansprüche, **dadurch gekennzeichnet, dass** wenigstens eine Ausgangsstufe (71, 72) einen U/I-Wandler (U! 1, U12) zur Erzeugung eines dem Temperaturdifferenzsignal oder dem absolutem Temperatursignal eines der Temperatursensoren (MS1, MS2) entsprechendes Stromsignal (lout1, lout2) aufweist.

11. Schaltungsanordnung nach einem der vorherigen Ansprüche, **dadurch gekennzeichnet, dass** das Temperaturdifferenzsignal und/oder das absolute Temperatursignal für eine weitere Verarbeitung in einer Prozesssteuerung (100) vorgesehen ist.

12. Schaltungsanordnung nach einem der vorherigen Ansprüche, **dadurch gekennzeichnet, dass** die Temperatursensoren (MS1, MS2) PT-100 Sensoren sind.

13. Schaltungsanordnung nach einem der vorherigen Ansprüche, **dadurch gekennzeichnet, dass** die Temperatursensoren (MS1, MS2) in 2-, 3- oder 4-Leitertechnik angeschlossen sind.

14. Schaltungsanordnung nach einem der vorherigen Ansprüche, **dadurch gekennzeichnet, dass** die Eingangsstufen (ES) und die Schalteranordnung (10) auf einer speziellen, vorzugsweise aus Kupferlagen oder Kupferflächen bestehenden Ausgleichsfläche der Mehrlagenleiterplatte zur Reduzierung von Thermospannungsfehlern angeordnet ist.

15. Schaltungsanordnung nach einem der vorherigen Ansprüche, **dadurch gekennzeichnet, dass** die Schaltungsanordnung in ein DIN-Schienengehäuse eingebaut ist.

16. Verfahren zur Ermittlung der Temperaturdifferenz zwischen zwei Temperatursensoren (MS1, MS2) mit einer Schaltungsanordnung nach einem der Ansprüche 1-15 , mit den Schritten
- Übertragung von Eingangstemperatursignalen (ZA, ZB) der Temperatursensoren (MS1, MS2) an die Schalteranordnung (10),
- wechselweises Zuführen der Signalpegel (A) der Temperatursensoren (MS1, MS2) durch die Schalteranordnung (10) dem A/D-Wandler (40),
- Digitalisieren der Signalpegel mittels des A/D-Wandlers (40) und Übertragen der digitalisierten Signale dem nachgeschalteten digitalen Rechner (50) zur Verarbeitung,
- Ermittlung eines Temperaturdifferenzsignals (AT) aus den digitalisierten Signalen mittels des digitalen Rechners (50),
- Übertragung des Temperaturdifferenzsignals (AT) dem ersten Ausgang (A1) des digitalen Rechners (50), und
- Bereitstellung des Temperaturdifferenzsignals (AT) zur weiteren Verarbeitung als analoges Temperaturdifferenzsignal mittels wenigstens dem D/A-Wandler (61) oder als digitale Information über die digitale Schnittstelle,
**gekennzeichnet durch**
- Unterdrückung von Störspannungen und Schutz vor Überspannung mittels der wenigstens zwei einander entsprechenden, symmetrisch aufgebauten und symmetrisch arbeitenden Eingangsstufen (ES), die zur Verbindung der Temperatursensoren (MS1, MS2) mit der Schalteranordnung (10) dienen.

17. Verfahren nach Anspruch 16, **dadurch gekennzeichnet, dass** die Eingangsstufen (ES) elektrisch und mechanisch symmetrisch ausgelegt sind.

18. Verfahren nach einem der Ansprüche 16 oder 17, **dadurch gekennzeichnet, dass** bei beiden Kanälen der Eingangsstufen (ES) Pausen- und Einschwingzeit als auch Messzeit exakt gleich sind.

19. Verfahren nach einem der Ansprüche 16 bis 18, **dadurch gekennzeichnet, dass** mittels der Schalteranordnung (10) die Strom- oder Spannungsversorgung der Temperatursensoren umgeschaltet wird.

20. Verfahren nach einem der Ansprüche 16 bis 19, **dadurch gekennzeichnet, dass** zwischen der Schalteranordnung (10) und dem A/D-Wandler (40) mindestens eine Verstärkerstufe (30) den jeweils durchgeschalteten Signalpegel (A) für den nachgeschalteten A/D-Wandler (40) anpasst und/oder ein Differenzverstärker (20) den Spannungsabfall an den Temperatursensoren (MS1, MS2) misst und einen Offset kompensiert.

21. Verfahren nach einem der Ansprüche 16 bis 20, **dadurch gekennzeichnet, dass** das analoge Temperaturdifferenzsignal mittels einer dem D/A-Wandler (61) nachgeschalteten Ausgangsstufe (71) gefiltert wird.

22. Verfahren nach einem der Ansprüche 16 bis 21, **dadurch gekennzeichnet, dass** der digitale Rechner (50) an einem zweiten Ausgang (A2) über einen weiteren D/A-Wandler (62) mit einer weiteren Ausgangsstufe (72) verbunden wird.

23. Verfahren nach Anspruch 22, **dadurch gekennzeichnet, dass** mittels der weiteren Ausgangsstufe (72) ein der gemessenen absoluten Temperatur eines der Temperatursensoren (MS1, MS2) entsprechendes Temperatursignal bereitstellt wird.

24. Verfahren nach einem der Ansprüche 16 bis 23, **dadurch gekennzeichnet, dass** ein dem Temperaturdifferenzsignal oder dem absolutem Temperatursignal eines der Temperatursensoren (MS1, MS2) entsprechendes Stromsignal (Iout1, Iout2) mittels eines U/I-Wandler (UI1, UI2) erzeugt wird.

25. Verfahren nach einem der Ansprüche 16 bis 24, **dadurch gekennzeichnet, dass** das Temperaturdifferenzsignal und/oder das absolute Temperatursignal von einer Prozesssteuerung (100) weiterverarbeitet werden.

26. Verfahren nach einem der Ansprüche 16 bis 25, **dadurch gekennzeichnet, dass** die Temperatursensoren (MS1, MS2) in 2-, 3- oder 4-Leitertechnik angeschlossen werden.

## Claims

1. Circuit arrangement for determining the temperature difference between two temperature sensors (MS1, MS2), having
- a switch arrangement (10), to which input temperature signals (ZA, ZB) of the temperature sensors (MS1, MS2) are transferred,
- an A/D converter (40), to which the signal levels of the temperature sensors (MS1, MS2) are alternately supplied by the switch arrangement (10), which A/D converter digitizes the signal levels and transfers the digitized signals to a downstream digital computer (50) for processing,
- the digital computer (50), which determines a temperature difference signal (AT) from the digitized signals and provides the temperature difference signal (AT) to a first output (A1) of the digital computer (50), and
- at least one D/A converter (61), which converts the temperature difference signal (AT) into an analogue temperature difference signal, or at least one digital interface, which provides the temperature difference signal as digital information for further processing,
**characterized in that**
- the circuit arrangement is arranged on a multilayer printed circuit board having an internal copper layer, and
- at least two mutually corresponding, symmetrically constructed and symmetrically operating input stages (ES) for disturbance voltage suppression and for overvoltage protection are connected upstream of the switch arrangement (10) for connecting the temperature sensors (MS1, MS2) to the switch arrangement (10), wherein the input stages (ES) are configured to be electrically and mechanically symmetrical and the symmetrical construction is achieved by a symmetrical arrangement of the components and the connection points for feeding in the input stages (ES) on the printed circuit board.

2. Circuit arrangement according to Claim 1, **characterized in that**, in the case of the two channels of the input stages (ES), the rest time and settling time and measuring time are exactly identical.

3. Circuit arrangement according to either of the preceding claims, **characterized in that** a protection element with extremely low leakage currents is provided as overvoltage protection.

4. Circuit arrangement according to any of the preceding claims, **characterized in that** the switch arrangement (10) switches over the current or voltage supply of the temperature sensors.

5. Circuit arrangement according to any of the preceding claims, **characterized in that** the switch arrangement (10) is embodied as a semiconductor multiplexer.

6. Circuit arrangement according to any of the preceding claims, **characterized in that** at least one amplifier stage (30), which adapts the signal level (A) which is respectively switched through for the downstream A/D converter (40), and/or a difference amplifier (20) for measuring the voltage drop across the temperature sensors (MS1, MS2) and for compensating an offset is provided between the switch arrangement (10) and the A/D converter (40).

7. Circuit arrangement according to any of the preceding claims, **characterized in that** an output stage (71) for filtering and/or signal adaption of the analogue temperature difference signal follows the D/A converter (61).

8. Circuit arrangement according to any of the preceding claims, **characterized in that** the digital computer (50) has a second output (A2), which is connected to a further output stage (72) via a further D/A converter (62).

9. Circuit arrangement according to Claim 8, **characterized in that** the further output stage (72) provides a temperature signal corresponding to the measured absolute temperature of one of the temperature sensors (MS1, MS2).

10. Circuit arrangement according to any of the preceding claims, **characterized in that** at least one output stage (71, 72) has a U/I converter (UI1, UI2) for generating a current signal (Iout1, Iout2) corresponding to the temperature difference signal or to the absolute temperature signal of one of the temperature sensors (MS1, MS2).

11. Circuit arrangement according to any of the preceding claims, **characterized in that** the temperature difference signal and/or the absolute temperature signal is provided for further processing in a process controller (100).

12. Circuit arrangement according to any of the preceding claims, **characterized in that** the temperature sensors (MS1, MS2) are PT-100 sensors.

13. Circuit arrangement according to any of the preceding claims, **characterized in that** the temperature sensors (MS1, MS2) are connected in 2-, 3- or 4-conductor technology.

14. Circuit arrangement according to any of the preceding claims, **characterized in that** the input stages (ES) and the switch arrangement (10) are arranged on a specific compensation area of the multilayer printed circuit board, preferably consisting of copper layers or copper areas, to reduce thermal voltage errors.

15. Circuit arrangement according to any of the preceding claims, **characterized in that** the circuit arrangement is installed in a DIN bar housing.

16. Method for determining the temperature difference between two temperature sensors (MS1, MS2) with a circuit arrangement according to any of Claims 1-15, having the steps of:
- transferring input temperature signals (ZA, ZB) of the temperature sensors (MS1, MS2) to the switch arrangement (10),
- alternately supplying the signal level (A) of the temperature sensors (MS1, MS2) by the switch arrangement (10) to the A/D converter (40),
- digitizing the signal level by means of the A/D converter (40) and transferring the digitized signals to the downstream digital computer (50) for processing,
- determining a temperature difference signal (AT) from the digitized signals by means of the digital computer (50),
- transferring the temperature difference signal (AT) to the first output (A1) of the digital computer (50), and
- providing the temperature difference signal (AT) for further processing as analogue temperature difference signal by means of at least the D/A converter (61) or as digital information via the digital interface,
**characterized by**
- suppressing disturbance voltages and protecting against overvoltage by means of the at least two mutually corresponding, symmetrically constructed and symmetrically operating input stages (ES) which are used to connect the temperature sensors (MS1, MS2) to the switch arrangement (10).

17. Method according to Claim 16, **characterized in that** the input stages (ES) are configured to be electrically and mechanically symmetrical.

18. Method according to either of Claims 16 and 17, **characterized in that**, in the case of the two channels of the input stages (ES), the rest time and settling time and measuring time are exactly identical.

19. Method according to any of Claims 16 to 18, **characterized in that** the switch arrangement (10) switches over the current or voltage supply of the temperature sensors.

20. Method according to any of Claims 16 to 19, **characterized in that**, between the switch arrangement (10) and the A/D converter (40), at least one amplifier stage (30) adapts the signal level (A) which is respectively switched through for the downstream A/D converter (40) and/or a difference amplifier (20) measures the voltage drop across the temperature sensors (MS1, MS2) and compensates an offset.

21. Method according to any of Claims 16 to 20, **characterized in that** the analogue temperature difference signal is filtered by means of an output stage (71) downstream of the D/A converter (61).

22. Method according to any of Claims 16 to 21, **characterized in that** the digital computer (50) is connected at a second output (A2) to a further output stage (72) via a further D/A converter (62).

23. Method according to Claim 22, **characterized in that** a temperature signal corresponding to the measured absolute temperature of one of the temperature sensors (MS1, MS2) is provided by means of the further output stage (72).

24. Method according to any of Claims 16 to 23, **characterized in that** a current signal (Iout1, Iout2) corresponding to the temperature difference signal or to the absolute temperature signal of one of the temperature sensors (MS1, MS2) is generated by means of a U/I converter (UI1, UI2).

25. Method according to any of Claims 16 to 24, **characterized in that** the temperature difference signal and/or the absolute temperature signal are further processed by a process controller (100).

26. Method according to any of Claims 16 to 25, **characterized in that** the temperature sensors (MS1, MS2) are connected in 2-, 3- or 4-conductor technology.

## Revendications

1. Agencement de circuit pour la détermination de la différence de température entre deux capteurs de température (MS1, MSE2), avec
- un agencement de commutateurs (10) auquel on transmet des signaux de température d'entrée (ZA, ZB) des capteurs de température (MS1, MS2),
- un convertisseur A/N (40), auquel les niveaux de signal des capteurs de température (MS1, MS2) sont amenés en alternance par l'agencement de commutateurs (10), lequel numérise les niveaux de signal et lequel transmet les signaux numérisés à un calculateur numérique (50) monté en aval pour la suite du traitement,
- le calculateur numérique (50), lequel détermine un signal de différence de température (AT) à partir des signaux numérisés et met à disposition d'une première sortie (A1) du calculateur numérique (50) le signal de différence de température (AT), et
- au moins un convertisseur A/N (61), lequel convertit le signal de différence de température en un signal de différence de température analogique, ou bien au moins une interface numérique, laquelle met à disposition le signal de différence de température en tant qu'information numérique pour la suite du traitement,
**caractérisé en ce que**
- l'agencement de circuit est disposé sur une carte de circuits imprimés multicouches présentant des couches de cuivre intérieures, et
- **en ce qu'**au moins deux étages d'entrée (ES) correspondant l'un à l'autre, structurés symétriquement et travaillant symétriquement, pour la suppression de la tension parasite et pour la protection contre les surtensions sont montés en amont de l'agencement de commutateurs (10) pour relier les capteurs de température (MS1, MS2) à l'agencement de commutateurs (10), les étages d'entrée (ES) étant conçus de manière électriquement et mécaniquement symétrique et la structure symétrique étant obtenue grâce à un agencement symétrique des composants et des points de connexion pour l'alimentation des étages d'entrée (ES) sur la carte de circuits imprimés.

2. Agencement de circuit selon la revendication 1, **caractérisé en ce que**, pour les deux canaux des étages d'entrée (ES), le temps de pause et le temps en régime transitoire tout comme également le temps de mesure sont parfaitement identiques.

3. Agencement de circuit selon l'une des revendications précédentes, **caractérisé en ce que** l'on prévoit, en guise de protection contre les surtensions, un élément de protection avec des courants de fuite extrêmement réduits.

4. Agencement de circuit selon l'une des revendications précédentes, **caractérisé en ce que** l'agencement de commutateurs (10) commute l'alimentation en courant ou tension des capteurs de température.

5. Agencement de circuit selon l'une des revendications précédentes, **caractérisé en ce que** l'agencement de commutateurs (10) est réalisé en tant que multiplexeur à semi-conducteur.

6. Agencement de circuit selon l'une des revendications précédentes, **caractérisé en ce que** l'on prévoit, entre l'agencement de commutateurs (10) et le convertisseur A/N (40), au moins un étage amplificateur (30) qui adapte le niveau de signal (A) respectivement commuté pour le convertisseur A/N (40) monté en aval et/ou un amplificateur différentiel (20) pour la mesure de la chute de tension au niveau des capteurs de température (MS1, MS2) et pour la compensation d'un décalage.

7. Agencement de circuit selon l'une des revendications précédentes, **caractérisé en ce qu'**un étage de sortie (71) est asservi au convertisseur A/N (61) pour le filtrage et/ou l'adaptation de signal du signal de différence de température analogique.

8. Agencement de circuit selon l'une des revendications précédentes, **caractérisé en ce que** le calculateur numérique (50) présente une deuxième sortie (A2), laquelle est reliée via un autre convertisseur A/N (62) à un autre étage de sortie (72).

9. Agencement de circuit selon la revendication 8, **caractérisé en ce que** l'autre étage de sortie (72) met à disposition un signal de température correspondant à la température absolue mesurée de l'un des capteurs de température (MS1, MS2).

10. Agencement de circuit selon l'une des revendications précédentes, **caractérisé en ce qu'**au moins un étage de sortie (71, 72) présente un convertisseur U/I (UI1, UI2) pour la génération d'un signal de courant (Ioutl, Iout2) correspondant au signal de différence de température ou au signal de température absolue de l'un des capteurs de température (MS1, MS2).

11. Agencement de circuit selon l'une des revendications précédentes, **caractérisé en ce que** le signal de différence de température et/ou le signal de température absolue est prévu pour la suite du traitement dans un dispositif de commande de processus (100).

12. Agencement de circuit selon l'une des revendications précédentes, **caractérisé en ce que** les capteurs de température (MS1, MS2) sont des capteurs PT-100.

13. Agencement de circuit selon l'une des revendications précédentes, **caractérisé en ce que** les capteurs de température (MS1, MS2) sont raccordés selon la technique à 2, 3 ou 4 conducteurs.

14. Agencement de circuit selon l'une des revendications précédentes, **caractérisé en ce que** les étages d'entrée (ES) et l'agencement de commutateurs (10) sont disposés sur une surface de compensation spéciale, se composant de préférence de couches de cuivre ou de surfaces de cuivre, de la carte de circuits imprimés multicouches, pour la réduction d'erreurs de tension thermoélectrique.

15. Agencement de circuit selon l'une des revendications précédentes, **caractérisé en ce que** l'agencement de circuit est intégré dans un boîtier à rail DIN.

16. Procédé pour la détermination de la différence de température entre deux capteurs de température (MS1, MS2) avec un agencement de circuit selon l'une des revendications 1-15, avec les étapes suivantes :
- la transmission de signaux de température d'entrée (ZA, ZB) des capteurs de température (MS1, MS2) à l'attention de l'agencement de commutateurs (10),
- l'amenée, en alternance, des niveaux de signal (A) des capteurs de température (MS1, MS2) par l'agencement de commutateurs (10) à l'attention du convertisseur A/N (40),
- la numérisation des niveaux de signal au moyen du convertisseur A/N (40) et la transmission des signaux numérisés au calculateur numérique (50) monté en aval pour la suite du traitement,
- la détermination d'un signal de différence de température (AT) à partir des signaux numérisés au moyen du calculateur numérique (50),
- la transmission du signal de différence de température (AT) à la première sortie (A1) du calculateur numérique (50), et
- la mise à disposition du signal de différence de température (AT) pour la suite du traitement, en tant que signal de différence de température analogique, au moyen d'au moins un convertisseur A/N (61) ou en tant qu'information numérique via l'interface numérique,
**caractérisé par**
- la suppression de tensions parasites et la protection contre les surtensions au moyen des au moins deux étages d'entrée (ES) correspondant l'un à l'autre, structurés symétriquement et travaillant symétriquement, lesquels servent à relier les capteurs de température (MS1, MS2) à l'agencement de commutateurs (10).

17. Procédé selon la revendication 16, **caractérisé en ce que** les étages d'entrée (ES) sont conçus de manière électriquement et mécaniquement symétrique.

18. Procédé selon l'une des revendications 16 ou 17, **caractérisé en ce que**, pour les deux canaux des étages d'entrée (ES), le temps de pause et le temps en régime transitoire tout comme également le temps de mesure sont parfaitement identiques.

19. Procédé selon l'une des revendications 16 à 18, **caractérisé en ce que** l'on commute l'alimentation en courant ou tension des capteurs de température au moyen de l'agencement de commutateurs (10).

20. Procédé selon l'une des revendications 16 à 19, **caractérisé en ce que**, entre l'agencement de commutateurs (10) et le convertisseur A/N (40), au moins un étage amplificateur (30) adapte le niveau de signal (A) respectivement commuté pour le convertisseur A/N (40) monté en aval et/ou **en ce qu'**un amplificateur différentiel (20) mesure la chute de tension au niveau des capteurs de température (MS1, MS2) et compense un décalage.

21. Procédé selon l'une des revendications 16 à 20, **caractérisé en ce que** le signal de différence de température analogique est filtré au moyen d'un étage de sortie (71) monté en aval du convertisseur A/N (61).

22. Procédé selon l'une des revendications 16 à 21, **caractérisé en ce que** le calculateur numérique (50) est relié au niveau d'une deuxième sortie (A2), via un autre convertisseur A/N (62), à un autre étage de sortie (72).

23. Procédé selon la revendication 22, **caractérisé en ce qu'**au moyen de l' autre étage de sortie (72), on met à disposition un signal de température correspondant à la température absolue mesurée de l'un des capteurs de température (MS1, MS2).

24. Procédé selon l'une des revendications 16 à 23, **caractérisé en ce qu'**un signal de courant (Iout1, Iout2) correspondant au signal de différence de température ou au signal de température absolue de l'un des capteurs de température (MS1, MS2) est généré au moyen d'un convertisseur U/I (UI1, UI2).

25. Procédé selon l'une des revendications 16 à 24, **caractérisé en ce que** le signal de différence de température et/ou le signal de température absolue sont soumis à la suite du traitement par un dispositif de commande de processus (100).

26. Procédé selon l'une des revendications 16 à 25, **caractérisé en ce que** les capteurs de température (MS1, MS2) sont raccordés selon la technique à 2, 3 ou 4 conducteurs.
